# EUROPÄISCHE PATENTSCHRIFT

(11) **EP 0 759 152 B1**
(45) Veröffentlichungstag und Bekanntmachung des Hinweises auf die Patenterteilung: **26.09.2001**
(21) Anmeldenummer: 96901240.0
(22) Anmeldetag: 07.02.1996
(51) Int. Cl.: G01D 5/14, H02K 49/10, F16H 49/00

(54) **WEGGEBER ZUR ERFASSUNG DES VERSTELLWEGES EINES STELLGLIEDS**
DISTANCE SENSOR FOR DETECTING THE ADJUSTMENT TRAVEL OF AN ACTUATOR
CAPTEUR DE DEPLACEMENT DETECTANT LA COURSE DE REGLAGE D'UN ORGANE DE REGLAGE

(30) Priorität: 02.03.1995 DE 19507180
(43) Veröffentlichungstag der Anmeldung: 26.02.1997
(73) Patentinhaber: ROBERT BOSCH GMBH, 70442 Stuttgart (DE)
(72) Erfinder: REICHMANN, Siegfried, D-77866 Rheinau (DE); MOENCH, Wolfgang, D-76530 Baden-Baden (DE)
(86) Internationale Anmeldenummer: DE9600188
(87) Internationale Veröffentlichungsnummer: WO9627117

(56) Entgegenhaltungen:
- EP-A- 0 044 905
- FR-A- 994 645
- GB-A- 2 143 328
- US-A- 2 243 555
- US-A- 3 525 004
- US-A- 4 857 784

## Beschreibung

### Stand der Technik

Die Erfindung geht aus von einem Weggeber zur Erfassung des Verstellwegs eines von einem rotierenden Antriebselement, insbesondere einer Getriebeabtriebswelle, angetriebenen Stellglieds, insbesondere eines Schiebedachs in Kraftfahrzeugen, der im Oberbegriff des Anspruchs 1 definierten Gattung.

Solche Weggeber werden bei der Steuerung und Positionserfassung von Antriebseinheiten verwendet, um den Stellweg der mit den Antriebseinheiten angetriebenen Stellgliedern innerhalb der Antriebseinheiten zu erfassen. Dabei ist mit dem integrierten Schrittschaltwerk eine hohe Positioniergenauigkeit erreichbar. Bei einem herkömmlichen Schrittschaltwerk entstehen beim Anschlag des am ersten Schaltrad angeordneten Schaltnockens an den Zahnflanken der Verzahnung des zweiten Schaltrads zu dessen schrittweisen Drehmitnahme deutlich merkbare Klickgeräusche, die bei schneller Schaltfolge zu einer erheblichen Geräuschentwicklung anwachsen. Wegen dieser Geräuschentwicklung sind solchen Weggebern einige Anwendungsbereiche verschlossen, in denen weitgehende Geräuschlosigkeit gefordert wird.

Aus der US-A-2,243,555 ist eine magnetische Getriebeanordnung bekannt, bei der aufgrund der magnetischen Abstoßung der einzelnen Getriebeteile eine weitgehend berührungslose Übertragung der Drehmomente gewährleistet werden soll. Nachteilig dabei jedoch ist, daß keine einzelnen Schaltschritte mit definierten Sperrphasen durchgeführt werden können.

### Vorteile der Erfindung

Der erfindungsgemäße Weggeber mit den Merkmalen im Kennzeichenteil des Anspruchs 1 hat den Vorteil, daß das integrierte Schrittschaltwerk absolut geräuschlos arbeitet. Durch die Magnetisierung der Schalträder mit abstoßend wirkender resultierender Magnetkraft zwischen ihnen verbleibt zwischen den Eingriffsflächen von Schaltnocken und Verzahnung immer ein Luftspalt, der ein Aufeinandertreffen der Eingriffsflächen verhindert. Das zweite Schaltrad wird von dem Schaltnocken des ersten Schaltrades aufgrund der abstoßenden Magnetkraft lautlos vorwärts getrieben, bis nach einem Schaltschritt der Schaltnocken wieder aus der Verzahnung des zweiten Schaltrads austritt. Dies ist immer der Fall, solange das Lastmoment am zweiten Schaltrad nicht nennenswert größer ist als das Nenndrehmoment. Bei beträchtlicher Schwergängigkeit des zweiten Schaltrades, z. B. infolge von Lagerschaden, Verschmutzung oder Vereisung, bei welcher die Magnetkraft nicht mehr ausreicht, das zweite Schaltrad zu drehen, gelangt der Schaltnocken nach Überwinden des Luftspalts zum Anschlag an die Zahnflanken der Verzahnung. Dabei entsteht naturgemäß das bekannte Schlaggeräusch. Für den vorübergehenden Notlaufbetrieb ist aber diese Geräuschentwicklung akzeptabel. Der erfindungsgemäße Weggeber hat damit den zusätzlichen Vorteil, auch bei schwergängigem Schaltrad noch einen Notbetrieb zum Verstellen des Stellglieds zu ermöglichen.

Ein sehr großer Vorteil ergibt sich durch die Unterteilung der Verzahnung des zweiten Schaltrads in zwei axial unmittelbar hintereinander am Umfang des zweiten Schaltrades angeordnete, gleich ausgebildete Außenverzahnungen und die Anordnung eines kreisförmigen Radialflansches am ersten Schaltrad, wobei der Radialflansch ausschließlich mit der einen Außenverzahnung am zweiten Schaltrad in Eingriff ist.

Damit wird die Voraussetzung dafür geschaffen, daß die einzelnen Schaltschritte definiert ausgeführt werden und ein Sperren des zweiten Schaltrads zwischen den einzelnen Schaltschritten berührungsfrei erfolgt.

Durch die in den weiteren Ansprüchen aufgeführten Maßnahmen sind vorteilhafte Weiterbildungen und Verbesserungen des im Anspruch 1 angegebenen Weggebers möglich.

Gemäß einer vorteilhaften Ausführungsform der Erfindung sind die beiden Schalträder mit gleicher Magnetisierungsrichtung axial oder radial magnetisiert, wobei sich eine radiale Magnetisierung mit dem magnetischen Nord- oder Südpol in Radmitte als wirkungsvoller erwiesen hat. Die Schalträder werden dabei bevorzugt als Spritzgußteile aus Plastoferrit oder aus einem Verbund zwischen Plastoferrit und Kunststoff gebildet. Alternativ können in den Schalträdern aber auch Ringmagnete in Verbindung mit Leitblechen vorgesehen werden. Die geometrische Form der Leitbleche wird dann entsprechend der Außenverzahnung bzw. den Außenkonturen des Schaltnockens gemacht.

Gemäß einer bevorzugten Ausführungsform der Erfindung ist die Verzahnung des zweiten Schaltrads in zwei axial unmittelbar hintereinander am Umfang des zweiten Schaltrads angeordnete, gleich ausgebildete Außenverzahnungen unterteilt. Jede Außenverzahnung weist um gleiche Umfangswinkel zueinander versetzte, vorzugsweise spitzenartige Zahnköpfe auf, die durch stetig ineinander übergehende kreisbogenförmige Zahnflanken miteinander verbunden sind. Die beiden Außenverzahnungen sind um die halbe Zahnteilung gegeneinander verdreht in fester Zuordnung zueinander angeordnet.

Entsprechend zu dieser Ausbildung des zweiten Schaltrads trägt das erste Schaltrad einen kreisbogenförmigen Radialflansch, der ausschließlich mit der einen Außenverzahnung am zweiten Schaltrad in Eingriff ist und dessen Umfangsfläche mit radialem Luftspaltabstand den Zahnflanken dieser Außenverzahnung gegenüberliegt. Der Radialflansch ist im Bereich des Schaltnockens eingebaucht.

Der Schaltnocken weist einen am ersten Schaltrad axial vorstehenden ersten Nockenteil zum ausschließlichen Eingriff in die andere Außenverzahnung am zweiten Schaltrad mit einer halbkreisförmigen Außenkontur und einen von den Begrenzungsflächen der Flanscheinbauchung gebildeten zweiten Nockenteil auf. Die beiden Nockenteile sind so zueinander angeordnet, daß sie bei Drehung des ersten Schaltrads nacheinander jeweils mit der zugeordneten Außenverzahnung in Eingriff kommen und dabei der zweite Nockenteil in die eine Außenverzahnung eindreht, wenn der erste Nockenteil aus der anderen Außenverzahnung austritt.

Durch diese konstruktive Gestaltung wird sowohl das Schalten des zweiten Schaltrads als auch das anschließende Sperren des zweiten Schaltrads bis zum nächsten Schaltschritt ohne Berührung der unmittelbar aneinander vorbeidrehenden und einander am Luftspalt gegenüberliegenden Außenflächen von erstem und zweitem Schaltrad bewirkt. Während der erste Schaltnocken durch Eingriff in die eine Außenverzahnung den Schaltschritt des zweiten Schaltrads einleitet, der dann durch Eingriff des zweiten Nockenteils in die andere Außenverzahnung beendet wird, wird durch Einschwenken des kreisbogenförmigen Radialflansches in den Zahnflankenbereich zwischen zwei aufeinanderfolgenden Zahnköpfen der Außenverzahnung eine Sperrung des zweiten Schaltrads solange bewirkt, bis der Radialflansch bei gleichzeitigem Eindrehen des ersten Nockenteils des Schaltnockens in seine zugeordnete Außenverzahnung aus der Außenverzahnung austritt.

Gemäß einer bevorzugten Ausführungsform der Erfindung ist die Erfassungsvorrichtung für die Drehstellung des zweiten Schaltrads eine magnetische Sensoreinheit, die Änderungen im Magnetfeld der rotierenden Schalträder detektiert. Somit erfolgt auch die Drehstellungserfassung des zweiten Schaltrads berührungs- und geräuschlos.

In einer vorteilhaften Ausführungsform der Erfindung weist die magnetische Sensoreinheit mindestens zwei im Magnetfeld des zweiten Schaltrads mit Drehwinkelabstand voneinander angeordnete Hallsensoren oder Hallschalter und eine am zweiten Schaltrad angeordnete magnetische Inhomogenität auf, die bei annähernder Ausrichtung mit jeweils einem der Hallsensoren oder Hallschalter eine Änderung von dessen Ausgangssignal bewirkt. Die Ausgangssignale der beiden Hallsensoren werden ausgewertet. Ein Stoppsignal wird erzeugt, sobald ein Hallsensor sein Ausgangssignal ändert, was dann der Fall ist, wenn die magnetische Inhomogenität mit dem Hallsensor in etwa ausgerichtet ist. Die Anordnung der beiden Hallsensoren zueinander ergibt die Anzahl der Verstellschritte des zweiten Schaltrads und somit den Verstellweg des Stellglieds. Bei einem Schaltnocken am ersten Schaltrad muß diese sich zum Weitertransport des zweiten Schaltrads um einen Schaltschritt jeweils um 360° drehen. Die Auflösung des Verstellwegs ist somit 360°.

Eine verbesserte Auflösung des Verstellwegs von nur 180° wird gemäß einer weiteren Ausführungsform der Erfindung dadurch erreicht, daß die Sensoreinheit zusätzlich einen im Magnetfeld des ersten Schaltrads angeordneten weiteren Hallsensor oder Hallschalter und eine am ersten Schaltrad im Bereich des Schaltnockens angeordnete magnetische Inhomogenität aufweist, die bei annähernder Ausrichtung mit dem weiteren Hallsensor eine Änderung des Ausgangssignals des weiteren Hallsensors bewirkt. Werden die Ausgangssignale des dem ersten Schaltrads zugeordneten Hallsensors und jeweils eines der dem zweiten Schaltrad zugeordneten Hallsensoren logisch "UND"-verknüpft, so wird ein Stoppsignal zur Stillsetzung des Antriebselements nur dann ausgegeben, wenn die begrenzte Inhomogenität am zweiten Schaltrad zu einem der beiden Hallsensoren ausgerichtet und die begrenzte Inhomogenität des ersten Schaltrads zu dem weiteren Hallsensor ausgerichtet ist.

Gemäß einer bevorzugten Ausführungsform der Erfindung werden die räumlich begrenzten magnetischen Inhomogenitäten an den Schalträdern mittels dort vorgesehener segmentartiger Erhebungen oder Vertiefungen realisiert. Bei axialer Magnetisierung der Schalträder werden die segmentartigen Erhebungen bevorzugt als jeweils ein im Radialabstand von der Drehachse des jeweiligen Schaltrads von diesem axial abstehendes, einstückiges Prisma mit kreissegmentförmigem Querschnitt realisiert und die Hallsensoren im Axialabstand von dem zugeordneten Schaltrad auf einer Leiterplatte angeordnet. Steht das Prisma jeweils unter einem Hallsensor, so bewirkt die dadurch herbeigeführte Magnetfeldänderung eine Änderung des Ausgangssignals des zugeordneten Hallsensors. Die Prismen sind so ausgebildet, daß sich jedes Prisma am zweiten Schaltrad nahezu über eine Zahnteilung der mit dem Radialflansch des ersten Schaltrads in Eingriff befindlichen Außenverzahnung erstreckt und das Prisma am ersten Schaltrad sich etwas mehr als über die Einbauchung des Radialflansches erstreckt. Der maximale radiale Abstand der halbkreisförmigen Außenkontur des ersten Nockenteils des Schaltnockens von der Drehachse des ersten Schaltrads und der Außenradius des kreisbogenförmigen Flansches sind gleich groß.

### Zeichnung

Die Erfindung ist anhand eines in der Zeichnung dargestellten Ausführungsbeispiels in der nachfolgenden Beschreibung näher erläutert. Es zeigen:
- Fig. 1: eine Seitenansicht eines Weggebers für ein Schiebedach eines Kraftfahrzeugs,
- Fig. 2: eine Draufsicht eines im Weggeber gemäß Fig. 1 integrierten Schrittschaltwerks in Richtung Pfeil II in Fig. 1.

### Beschreibung des Ausführungsbeispiels

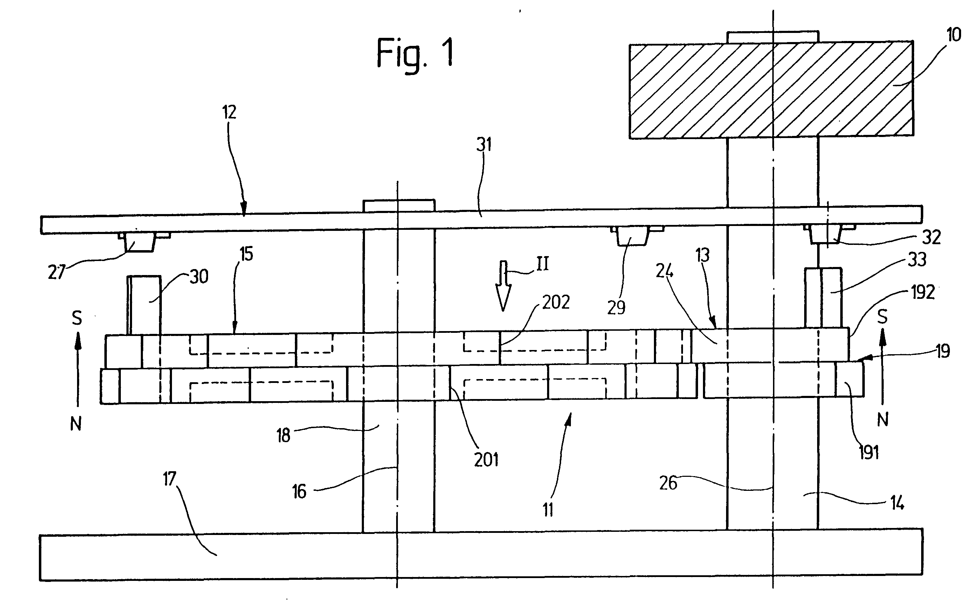

Der in Fig. 1 in Seitenansicht zu sehende Weggeber dient zur Erfassung der aktuellen Schiebedachposition eines Schiebedachs in einem Kraftfahrzeug, das von einer elektrischen Antriebseinheit geöffnet, geschlossen, gehoben oder gesenkt wird. Da die Schiebedachposition nicht direkt am Schiebedach abgenommen werden kann, erfolgt die Positionserfassung durch den Weggeber in der Antriebseinheit. Diese besteht in bekannter Weise aus einem Elektromotor und einem Übersetzungsgetriebe, dessen Abtriebsritzel unmittelbar die Schiebedachbewegung bewirkt. Von der Antriebseinheit ist in Fig. 1 lediglich das Abtriebsritzel 10 dargestellt.

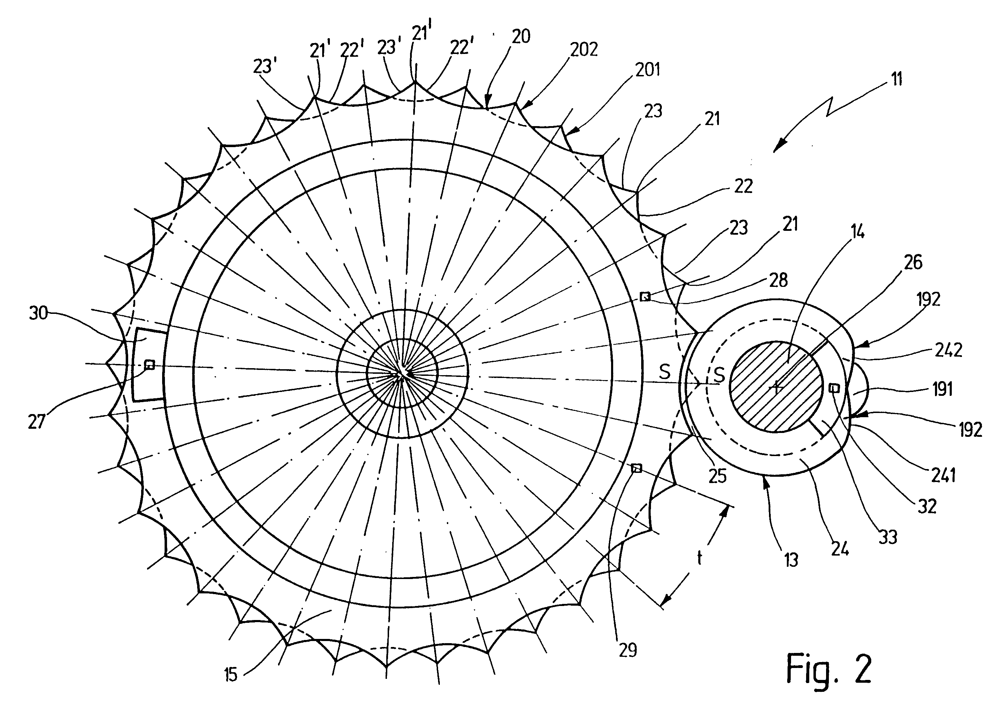

Der Weggeber weist ein Schrittschaltwerk 11 sowie eine Einrichtung zum Erfassen der Drehstellung des Schrittschaltwerks 11, im folgenden Drehstellung-Erfassungsvorrichtung 12 genannt, auf. Zu dem Schrittschaltwerk 11 gehört ein erste Schaltrad 13, das drehfest auf einer Welle 14 des Abtriebsritzels 10 sitzt, und ein zweites Schaltrad 15, das um eine zur Welle 14 parallele Drehachse 16 drehbar angeordnet ist, wozu es drehbar auf einer in einer Aufnahme 17 gehaltenen Achse 18 sitzt. Wie aus Fig. 2 ersichtlich ist, trägt das erste Schaltrad 13 einen Schaltnocken 19 und das zweite Schaltrad 15 eine umlaufende Verzahnung 20 in die der Schaltnocken 19 bei jeder Umdrehung des ersten Schaltrads 13 vorübergehend eingreift und dadurch das zweite Schaltrad 15 um einen Schaltschritt mit festem Drehwinkel weiterdreht. Beide Schalträder 13,15 sind axial magnetisiert, und zwar mit gleicher Magnetisierungsrichtung. Die Magnetisierungsrichtung der beiden Schalträder ist in Fig. 1 mit N-S angegeben. Die beiden Schalträder 13,15 sind jeweils als Spritzgußteil aus Plastoferrit gefertigt.

Im einzelnen ist die Verzahnung 20 des zweiten Schaltrads 15 in zwei axial unmittelbar hintereinander am Umfang des zweiten Schaltrads 15 angeordnete Außenverzahnungen 201,202 unterteilt, die identisch ausgebildet sind. Jede Außenverzahnung 201 bzw. 202 weist eine Vielzahl von um gleiche Umfangswinkel zueinander versetzten, spitzenartigen Zahnköpfen 21 auf, die miteinander über kreisbogenförmige, jeweils symmetrisch zum Zahnkopf 21 verlaufende Zahnflanken 22,23 verbunden sind. Die Zahnflanken 22,23 aufeinanderfolgende Zähne gehen stetig ineinander über, so daß sich von Zahnkopf 21 zu Zahnkopf 21 eine aus zwei Zahnflanken 22,23 sich zusammensetzende kreisbogenförmige Fläche erstreckt. Die beiden Außenverzahnungen 201 und 202 sind zueinander um eine halbe Zahnteilung versetzt in fester Zuordnung zueinander angeordnet. Zur Verdeutlichung des Zahnversatzes sind die Bezugszeichen der Zahnköpfe 21' und Zahnflanken 22',23' der Außenverzahnung 202 mit einem Beistrich versehen. Die Zahnteilung ist durch den Abstand der Zahnköpfe 21 bzw. 21' voneinander festgelegt und als Drehwinkel angegeben. Die Zahnteilung, in Fig. 2 mit t gekennzeichnet, ist in beiden Außenverzahnungen 201,202 konstant.

Das erste Schaltrad 13 trägt einen kreisförmigen Radialflansch 24, der ausschließlich mit der Außenverzahnung 202 in Eingriff ist. Seine Außenfläche liegt, wie aus Fig. 2 ersichtlich ist, unter Belassung eines radialen Luftspalts 25 den Zahnflanken 22',23' der Außenverzahnung 202 gegenüber. Im Bereich des Schaltnockens 19 ist der Radialflansch 24 radialsymmetrisch so eingebaucht, daß sein Flanschradius stetig auf ein Minimum abnimmt. Der Schaltnocken 19 weist einen am ersten Schaltrad 13 radial vorstehenden ersten Nockenteil 191 zum ausschließlichen Eingriff in die Außenverzahnung 201 am zweiten Schaltrad 15 sowie einen von den Begrenzungsflächen 241,242 der Flanscheinbauchung gebildeten zweiten Nockenteil 192 auf. Der erste Nockenteil 191 hat eine etwa halbkreisförmige Außenkontur, deren maximaler Abstand von der Drehachse 26 des ersten Schaltrads 13 gleich dem Außendurchmesser des Radialflansches 24 ist. Die beiden Nockenteile 191,192 sind am ersten Schaltrad 13 zueinander so angeordnet, daß sie bei Drehung des ersten Schaltrads 13 nacheinander jeweils mit der zugeordneten Außenverzahnung 201 bzw. 202 am zweiten Schaltrad 15 mit Luftspaltabstand zu den Zahnflanken 22,23 bzw. 22',23' in Eingriff kommen, wobei der zweite Nockenteil 192 in die zugeordnete Außenverzahnung 202 eindreht, wenn der erste Nockenteil 191 aus seiner zugeordneten Außenverzahnung 201 austritt.

### Die Funktionsweise des Schrittschaltwerks 11 ist wie folgt:

Im Stillstand des ersten Schaltrads 13 greift der Radialflansch 24 in die zugeordnete Außenverzahnung 202 ein, wobei durch die gleiche axiale Magnetisierungsrichtung der beiden Schalträder 13,15 eine resultierende Magnetkraft zwischen den beiden Schalträdern 13,15 auftritt, wodurch die beiden Schalträder 13,15 voneinander abgestoßen werden. Der Luftspalt 25 wird dadurch eingehalten und eine Berührung der Zahnflanken 22',23' durch die Außenfläche des Radialflansches 24 verhindert. Über den Luftspalt 25 und die Zahnflanken 22',23' ist durch den Radialflansch 24 das zweite Schaltrad 15 bei stillstehendem ersten Schaltrad 13 gegen Drehung gesperrt. Wird nun die Antriebseinheit eingeschaltet und verschiebt das Antriebsritzel 10 das Schiebedach, so kommt bei jeder Umdrehung des ersten Schaltrads 13, beispielsweise entgegen Uhrzeigersinn in Fig. 2, zunächst der erste Nockenteil 191 in Eingriff mit der ihm zugeordneten Außenverzahnung 201 und drückt über den von der resultierenden abstoßenden Magnetkraft erzeugten Luftspalt 25 zwischen der Außenkontur des ersten Nockenteils 191 und der Zahnflanke 23 das zweite Schaltrad 15 um zunächst einen halben Schaltschritt weiter, der der halben Zahnteilung der Außenverzahnung 201 entspricht. Hier tritt der erste Nockenteil 191 aus der Außenverzahnung 201 aus und gleichzeitig kommt der zweite Nockenteil 192 in Eingriff mit seiner zugeordneten Außenverzahnung 202. Durch die resultierende abstoßende Magnetkraft zwischen den beiden Schalträdern 13,15 verbleibt wiederum zwischen der Begrenzungsfläche 241 der Flanscheinbauchung und der Zahnflanke 23' der Außenverzahnung 202 ein Luftspalt 25, so daß auch der zweite Nockenteil 192 die Zahnflanke 23' nicht berührt. Der zweite Nockenteil 192 dreht damit berührungslos das zweite Schaltrad 15 um einen weiteren halben Schaltschritt, bis der zweite Nockenteil 192 wieder aus der Außenverzahnung 202 austritt. Damit ist das zweite Schaltrad 15 um einen Schaltschritt weitergedreht, der einem festen Drehwinkel entspricht und gleich der Zahnteilung t der Außenverzahnungen 201,202 ist. Bei der nächsten Umdrehung des ersten Schaltrads 13 wiederholt sich der beschriebene Vorgang.

Wie daraus erkennbar ist, wird das zweite Schaltrad 15 vom ersten Schaltrad 13 schrittweise mechanisch gedreht, wobei jedoch durch die großflächige Ausbildung von Schaltnocken 19 und Verzahnung 20 und durch die gleiche Magnetisierung der beiden Schalträder 13,15 die Eingriffsflächen von Schaltnocken 19 und Verzahnung 20, welche die mechanische Fortschaltung des zweiten Schaltrads 15 bewirken, sich einander nicht berühren. Dies ist immer der Fall, solange am zweiten Schaltrad 15 kein nennenswert größeres Lastmoment auftritt als das Nenndrehmoment. Wird jedoch das zweite Schaltrad 15 extrem schwergängig, z.B. durch Vereisung, Lagerschaden oder Lagerverschmutzung, so reicht die resultierende Magnetkraft zwischen den Schalträdern 13,15 nicht mehr aus, den Luftspalt 25 zwischen dem Schaltnocken 19 und der Verzahnung 20 aufrechtzuerhalten. In diesem Fall schlägt der Schaltnocken 19 an den entsprechenden Zahnflanken 23 und 23' der Außenverzahnung 201 und 202 an und das zweite Schaltrad 15 wird durch Flächenkontakt zwischen Schaltnocken 19 und Verzahnung 20 gewaltsam weitergedreht.

Bei inverser Drehrichtung des Elektromotors der Antriebseinheit dreht die Welle 14 und damit das erste Schaltrad 13 in Fig. 2 im Uhrzeigersinn. Der Schaltvorgang zur Mitnahme des zweiten Schaltrads 15 ist der gleiche wie vorstehend beschrieben, mit dem Unterschied, daß der Schaltnocken 19 nunmehr über die Zahnflanken 22 und 22' das zweite Schaltrad 15 bei jeder Umdrehung um einen Schaltschritt entgegen Uhrzeigersinn weiterbewegt.

Aufgrund der vorhandenen Magnetisierung der Schalträder 13,15 ist die Drehstellung-Erfassungsvorrichtung 12 vorteilhafterweise als eine magnetische Sensoreinheit ausgebildet, die Änderungen im Magnetfeld der rotierenden Schalträder 13,15 detektiert und somit die Drehstellung des zweiten Schaltrads 15 erkennt. Die Sensoreinheit weist drei im Magnetfeld des zweiten Schaltrads 15 angeordnete Hallsensoren oder Hallschalter 27, 28, 29 und eine am zweiten Schaltrad 15 angeordnete magnetische Inhomogenität auf, die im Ausführungsbeispiel der Fig. 1 und 2 als ein Prisma 30 mit kreissegmentförmigem Querschnitt ausgebildet ist, das im Radialabstand von der Drehachse 16 des zweiten Schaltrads 15 von diesem axial absteht. Die magnetische Inhomogenität kann aber auch durch eine anders ausgebildete Erhebung oder gar durch eine Vertiefung im zweiten Schaltrad 15 realisiert werden. Die Hallsensoren 27 - 29 sind auf einer Leiterplatte 31 angeordnet, die im Abstand von den Schalträdern 13,15 raumfest angeordnet ist. Die Hallsensoren 27 - 29 sind dabei auf der zu dem zweiten Schaltrad 15 weisenden Unterseite der Leiterplatte 31 angeordnet. In Fig. 1 sind lediglich die Hallsensoren 27 und 29 zu sehen. Zur Veranschaulichung der Lage der drei Hallsensoren 27 - 29 auf der Leiterplatte 30 sind in Fig. 2 die Hallsensoren 27 - 29 zusätzlich eingezeichnet, die sich als im Axialabstand von dem zweiten Schaltrad 15 befindlich vorgestellt werden müssen.

Die Wirkungsweise der Hallsensoren 27 - 29 ist bekannt und beispielsweise auch in der US-PS 4 857 784 beschrieben. Kurz gesagt ändert jeder Hallsensor 27 - 29 sein elektrisches Ausganssignal, wenn sich das Magnetfeld, dem er ausgesetzt ist, ändert. Die Änderung des Magnetfelds wird durch das Prisma 30 bewirkt, wenn dieses in etwa axial zu jeweils einem der Hallsensoren 27 - 29 ausgerichtet ist, wie dies für den Hallsensor 27 in Fig. 1 dargestellt ist. Eine hier nicht dargestellte elektronische Schaltung wertet die Ausgangssignale der Hallsensoren 27 - 29 aus und stoppt den Elektromotor der Antriebseinheit, sobald das Prisma 30 unter einem der Hallsensoren 27 - 29 steht. Die Anordnung der Hallsensoren 27 - 29 zueinander in ihrer Verteilung über das zweite Schaltrad 15 ergibt die Anzahl der Schaltschritte des zweiten Schaltrads 15 und somit den Verstellweg des Schiebedachs durch das Antriebsritzel 10. Wie aus Fig. 2 zu erkennen ist, wird beispielsweise das zweite Schaltrad 15 um acht Schaltschritte gedreht, bevor das Ausgangssignal des Hallsensors 28 einen Stopp des Elektromotors bewirkt.

Da das erste Schaltrad 13 sich jeweils um eine volle Umdrehung drehen muß, damit das zweite Schaltrad 15 um einen Schaltschritt weitergedreht wird, beträgt die Auflösung über den Verstellweg 360°. Um eine bessere Auflösung über den Verstellweg, hier von 180°, zu erreichen, weist die magnetische Sensoreinheit einen auf der Leiterplatte 31 angeordneten, dem ersten Schaltrad 13 zugeordneten vierten Hallsensor 32 und eine am ersten Schaltrad 13 vorgesehene magnetische Inhomogenität im Bereich des Schaltnockens 19 auf. Diese Inhomogenität wird wiederum durch ein Prisma 33 realisiert, das einen kreissegmentförmigen Querschnitt aufweist und im Radialabstand von der Drehachse 26 des ersten Schaltrads 13 von dem ersten Schaltrad 13 einstückig axial absteht. Das Prisma 33 erstreckt sich dabei über etwas mehr als die Einbauchung des Radialflansches 24 am ersten Schaltrad 13 mit ihren Begrenzungsflächen 241 und 242, während das vom zweiten Schaltrad 15 einstückig axial abstehende Prisma 30 sich über etwas weniger als eine Zahnteilung der Außenverzahnung 202 erstreckt. Beide Prismen 30,33 sind dabei radialsymmetrisch angeordnet. Auch der Hallsensor 32 ändert sein Ausgangssignal, sobald das Prisma 33 axial unter ihm steht, wie dies in Fig. 1 dargestellt ist. Die elektronische Schaltung verknüpft nunmehr das Ausgangssignal des Hallsensors 32 mit jeweils dem Ausgangssignal der Hallsensoren 27,28 oder 29 durch ein logisch "UND"-Glied, so daß der Elektromotor der Antriebseinheit erst dann gestoppt wird, wenn sowohl der Hallsensor 27 oder der Hallsensor 28 oder der Hallsensor 29 und der Hallsensor 32 sein Ausgangssignal ändert, also das Prisma 33 unter dem Hallsensor 32 und das Prisma 30 unter einem der Hallsensoren 27,28 oder 29 steht. Die Anzahl der dem zweiten Schaltrad 15 zugeordneten Hallsensoren 27 - 29 und ihre Verteilung über den Umfang des zweiten Schaltrads 15 hinweg ist beliebig und hängt von dem zur realisierenden Verschiebeweg des Schiebedachs ab.

Die Erfindung ist nicht auf das beschriebene Ausführungsbeispiel eines Weggebers für ein Schiebedach in Kraftfahrzeugen beschränkt. So kann der erfindungsgemäße Weggeber zur Erfassung des Verstellwegs eines beliebigen Stellgliedes eingesetzt werden. Selbstverständlich ist es auch möglich, als Drehstellung-Erfassungsvorrichtung keine magnetische Sensoreinheit zu verwenden, sondern beispielsweise ein mit dem zweiten Schaltrad drehfest verbundenes Zählwerk einzusetzen. Die magnetische Sensoreinheit hat jedoch den Vorteil der ebenfalls berührungslosen und damit geräuschlosen Drehwinkelerfassung des zweiten Schaltrads.

## Patentansprüche

1. Weggeber zur Erfassung des Verstellwegs eines von einem rotierenden Antriebselement, insbesondere eines Getriebeabtriebsritzels (10), angetriebenen Stellglieds, insbesondere eines Schiebedachs in Kraftfahrzeugen, mit einem Schrittschaltwerk (11) das ein drehfest mit dem Antriebselement verbundenes erstes Schaltrad (13) mit mindestens einem darauf angeordneten Schaltnocken (19) und ein um eine zum Antriebselement achsparallele Drehachse (16) drehbares zweites Schaltrad (15) aufweist, das eine mit dem mindestens einen Schaltnocken (19) zusammenwirkende, umlaufende Verzahnung (20) trägt und bei jeder Umdrehung des ersten Schaltrads (13) durch vorübergehenden Eingriff des Schaltnockens (19) in die Verzahnung (20) um mindestens einen Schaltschritt mit jeweils festem Drehwinkel weitergedreht wird, und mit einer Vorrichtung (12) zum Erfassen der Drehstellung des zweiten Schaltrads (15), wobei die beiden Schalträder (13, 15) so magnetisiert sind, daß die jeweils unmittelbar aneinander angrenzenden Flächen der beiden Schalträder (13, 15) sich gegenseitig abstoßen.

2. Weggeber nach Anspruch 1, **dadurch gekennzeichnet, daß** die beiden Schalträder (13,15) axial oder radial mit gleicher Magnetisierungsrichtung magnetisiert sind.

3. Weggeber nach Anspruch 1 oder 2, **dadurch gekennzeichnet, daß** die Schalträder (13,15) als Spritzgußteile aus Plastoferrit oder als Verbund zwischen Plastoferrit und Kunststoff ausgebildet sind.

4. Weggeber nach einem der Ansprüche 1 - 3, **dadurch gekennzeichnet, daß** die Verzahnung (20) des zweiten Schaltrads (15) in zwei axial unmittelbar hintereinander am Umfang des zweiten Schaltrads (15) angeordnete, gleich ausgebildete Außenverzahnungen (201,202) unterteilt ist, daß jede Außenverzahnung (201,202) um gleiche Umfangswinkel zueinander versetzte, vorzugsweise spitzenartige Zahnköpfe (21,21') aufweist, die durch stetig ineinander übergehende kreisbogenförmige Zahnflanken (22,23,22',23') miteinander verbunden sind, und daß die beiden Außenverzahnungen (201,202) um die halbe Zahnteilung (t) gegeneinander verdreht in fester Zuordnung zueinander angeordnet sind.

5. Weggeber nach Anspruch 4, **dadurch gekennzeichnet, daß** das erste Schaltrad (13) einen kreisförmigen Radialflansch (24) trägt, der ausschließlich mit der einen Außenverzahnung (202) am zweiten Schaltrad (15) in Eingriff ist und dessen Umfangsfläche mit radialem Luftspaltabstand den Zahnflanken (22',23') dieser Außenverzahnung (202) gegenüberliegt, daß der Radialflansch (24) im Bereich des Schaltnockens (19) radialsymmetrisch so eingebaucht ist, daß sein Flanschradius stetig auf ein Minimum abnimmt, daß der Schaltnocken (19) einen am ersten Schaltrad (13) radial vorstehenden ersten Nockenteil (191) zum ausschließlichen Eingriff in die andere Außenverzahnung (201) am zweiten Schaltrad (15) mit einer halbkreisförmigen Außenkontur, deren maximaler Radialabstand von der Drehachse (26) des ersten Schaltrads (13) gleich dem Außendurchmesser des Radialflansches (24) ist, und einen von den Begrenzungsflächen (241,242) der Flanscheinbauchung gebildeten zweiten Nockenteil (192) aufweist, und daß die beiden Nockenteile (191,192) des Schaltnockens (19) so zueinander angeordnet sind, daß sie bei Drehung des ersten Schaltrads (13) nacheinander jeweils mit der zugeordneten Außenverzahnung (201 bzw. 202) am zweiten Schaltrad (15) mit Luftspaltabstand zu den Zahnflanken (22,23 bzw. 22',23') in Eingriff kommen und dabei der zweiten Nockenteil (192) in die eine Außenverzahnung (202) eindreht, wenn der erste Nockenteil (191) aus der anderen Außenverzahnung (201) austritt.

6. Weggeber nach einem der Ansprüche 1 - 5, **dadurch gekennzeichnet, daß** die Erfassungsvorrichtung (12) für die Drehstellung des zweiten Schaltrads (15) eine magnetische Sensoreinheit ist, die Änderungen im Magnetfeld der rotierenden Schalträder (13,15) detektiert.

7. Weggeber nach Anspruch 6, **dadurch gekennzeichnet, daß** die Sensoreinheit mindestens zwei im Magnetfeld des zweiten Schaltrads (15) mit Drehwinkelabstand voneinander angeordnete Hallsensoren (27-29) und eine am zweiten Schaltrad (15) angeordnete magnetische Inhomogenität aufweist, die bei annähernder Ausrichtung mit jeweils einem der Hallsensoren (27-29) eine Änderung von dessen Ausgangssignal bewirkt.

8. Weggeber nach Anspruch 7, **dadurch gekennzeichnet, daß** die Sensoreinheit einen im Magnetfeld des ersten Schaltrads (13) angeordneten weiteren Hallsensor (32) und eine am ersten Schaltrad (13) im Bereich des Schaltnockens (19) angeordnete magnetische Inhomogenität aufweist, die bei annähernder Ausrichtung mit dem weiteren Hallsensor (32) eine Änderung von dessen Ausgangssignal bewirkt, und daß die Ausgangssignale des dem ersten Schaltrad (13) zugeordneten Hallsensors (32) und jeweils eines der dem zweiten Schaltrad (15) zugeordneten Hallsensoren (27-29) logisch "UND"-verknüpft sind.

9. Weggeber nach Anspruch 7 oder 8, **dadurch gekennzeichnet, daß** die Inhomogenität mittels einer am Schaltrad (13,15) vorgesehenen segmentartigen Erhebung oder Vertiefung realisiert ist.

10. Weggeber nach Anspruch 9, **dadurch gekennzeichnet, daß** bei axialer Magnetisierung der Schalträder (13,15) die Hallsensoren (27,28,29,33) im Axialabstand von dem zugeordneten Schaltrad (13,15) raumfest, vorzugsweise auf einer Leiterplatte (31), angeordnet sind und daß die segmentartigen Erhebungen auf den Schalträdern (13,15) jeweils als ein im Radialabstand von der Drehachse (16,26) des jeweiligen Schaltrads (13,15) von diesem axial abstehendes, einstückiges Prisma (30,33) mit vorzugsweise kreissegmentförmigem Querschnitt ausgebildet ist.

## Claims

1. Position pickup for determining the adjustment travel of an actuator element, in particular a sun roof in motor vehicles, which is driven by a rotating drive element, in particular a gear-mechanism output pinion (10), having an indexing mechanism (11) which has a second actuating wheel (13), connected in a rotationally fixed fashion to the drive element, with at least one actuating cam (19) arranged on it and a second actuating wheel (15) which can rotate about an axis (16) of rotation which is coaxial with the drive element and which has circumferential toothing (20) which interacts with the at least one actuating cam (19), and whenever the first actuating wheel (13) rotates it is rotated further by at least one indexing step with a respective fixed angle of rotation as a result of temporary engagement of the actuating cam (19) in the toothing (20), and having a device (12) for sensing the rotational setting of the second actuating wheel (15), the two actuating wheels (13, 15) being magnetized in such a way that the immediately adjacent faces of the two actuating wheels (13, 15) abut one another.

2. Position pickup according to Claim 1, **characterized in that** the two actuating wheels (13, 15) are magnetized axially or radially with an identical direction of magnetization.

3. Position pickup according to Claim 1 or 2, **characterized in that** the actuating wheels (13, 15) are embodied as injection-moulded parts made of plastoferrite or as a compound of plastoferrite and plastic.

4. Position pickup according to one of Claims 1-3, **characterized in that** the toothing (20) of the second actuating wheel (15) is divided into two outer toothings (201, 202) which are of identical design and are arranged directly axially one behind the other on the circumference of the second actuating wheel (15), in that each outer toothing (201, 202) has preferably pointed tooth heads (21, 21') which are offset with respect to one another by identical circumferential angles and are connected to one another by means of circular-arc-shaped tooth edges (22, 23, 22', 23') which are continuous with one another, and in that the two outer toothings (201, 202) are arranged in a fixed relationship in relation to one another, rotated with respect to one another by half the tooth pitch (t).

5. Position pickup according to Claim 4, **characterized in that** the first actuating wheel (13) has a circular radial flange (24) which is exclusively in engagement with the one outer toothing (202) on the second actuating wheel (15) and whose circumferential face lies opposite the tooth edges (22', 23') of this outer toothing (202) with a radial air gap spacing, in that the radial flange (24) is constricted in the vicinity of the actuating cam (19) in a radially symmetrical fashion in such a way that its flange radius decreases continuously to a minimum, in that the actuating cam (19) has a first cam part (191) which protrudes radially on the first actuating wheel (13), for exclusive engagement in the other outer toothing (201) on the second actuating wheel (15) with a semicircular outer contour whose maximum radial spacing from the axis (26) of rotation of the first actuating wheel (13) is equal to the outer diameter of the radial flange (24), and a second cam part (192) which is formed by the boundary faces (241, 242) of the flange constriction, and in that the two cam parts (191, 192) of the actuating cam (19) are arranged with respect to one another in such a way that when the first actuating wheel (13) rotates they successively come into engagement with the assigned outer toothing (201 or 202) on the second actuating wheel (15) with air gap spacing from the tooth edges (22, 23 and 22', 23') and as they do so the second cam part (192) rotates into the one outer toothing (202) when the first cam part (191) disengages from the other outer toothing (201).

6. Position pickup according to one of Claims 1-5, **characterized in that** the sensing device (12) for the rotary position of the second actuating wheel (15) is a magnetic sensor unit which detects changes in the magnetic field of the rotating actuating wheels (13, 15).

7. Position pickup according to Claim 6, **characterized in that** the sensor unit has at least two Hall sensors (27-29) which are arranged in the magnetic field of the second actuating wheel (15) with rotary angle spacing from one another, and a magnetic inhomogeneity which is arranged on the second actuating wheel (15) and, as the alignment with, in each case, one of the Hall sensors (27-29) approaches, brings about a change in its output signal.

8. Position pickup according to Claim 7, **characterized in that** the sensor unit has a further Hall sensor (32) which is arranged in the magnetic field of the first actuating wheel (13), and a magnetic inhomogeneity which is arranged on the first actuating wheel (13) in the vicinity of the actuating cam (19) and, as the alignment with the further Hall sensor (32) approaches, brings about a change in its output signal, and in that the output signals of the Hall sensor (32) which is assigned to the first actuating wheel (13) and in each case one of the Hall sensors (27-29) which are assigned to the second actuating wheel (15) are logically "AND"-connected.

9. Position pickup according to Claim 7 or 8, **characterized in that** the inhomogeneity is implemented by means of a segment-like elevation or depression which is provided on the actuating wheel (13, 15).

10. Position pickup according to Claim 9, **characterized in that**, when the actuating wheels (13, 15) are magnetized axially, the Hall sensors (27, 28, 29, 33) are arranged at an axial distance from the assigned actuating wheel (13, 15) in a spatially fixed fashion, preferably on a printed circuit board (31), and in that the segment-like elevations on the actuating wheels (13, 15) are each embodied as a single-piece prism (30, 32) which has a preferably circular-segment-shaped cross section and protrudes axially from the respective actuating wheel (13, 15) at a radial distance from the axis (16, 26) of rotation of the respective actuating wheel (13, 15).

## Revendications

1. Capteur de déplacement pour détecter le déplacement d'un actionneur entraîné par un élément d'entraînement en rotation, notamment d'un pignon de sortie de transmission (10), notamment pour le toit coulissant d'un véhicule, comprenant :
- un mécanisme de commutation pas-à-pas (11) comportant une première roue de commutation (13) reliée solidairement en rotation à l'élément d'entraînement, avec au moins une came de commutation (19) et une seconde roue de commutation (15) tournant autour d'un axe de rotation (16) parallèle à celui de l'élément d'entraînement, cette seconde roue portant une denture périphérique (20) coopérant avec au moins une came de commutation (19), et à chaque rotation de la première roue de commutation (13), par l'engrènement provisoire de la came de commutation (19) dans la denture (20), celle-ci est entraînée d'au moins un pas de commutation correspondant respectivement à un angle de rotation fixe, et
- un dispositif (12) pour détecter la position de rotation de la seconde roue de commutation (15),
- les deux roues de commutation (13, 15) étant aimantées pour que les surfaces directement adjacentes des deux roues de commutation (13, 15) se repoussent réciproquement.

2. Capteur de déplacement selon la revendication 1,
**caractérisé en ce que**
les deux roues de commutation (13, 15) sont aimantées axialement ou radialement dans la même direction d'aimantation.

3. Capteur de déplacement selon la revendication 1 ou 2,
**caractérisé en ce que**
les roues de commutation (13, 15) sont des pièces injectées en plastoferrite ou en un composé de plastoferrite et de matière plastique.

4. Capteur de déplacement selon l'une quelconque des revendications 1 à 3,
**caractérisé en ce que**
- la denture (20) de la seconde roue de commutation (15) est subdivisée en dentures extérieures (201, 202) identiques, disposées axialement directement l'une derrière l'autre, à la périphérie de la seconde roue de commutation (15),
- chaque denture extérieure (201, 202) comporte des têtes de dents (21, 21') de préférence en forme de pointes, décalées de manière équiangulaire, ces têtes étant reliées par des flancs de dents (22, 23, 22', 23') en arc de cercle, qui se rejoignent de façon continue et,
- les deux dentures extérieures (201, 202) sont tournées l'une par rapport à l'autre de la moitié de la division de dent (t) en étant associées solidairement.

5. Capteur de déplacement selon la revendication 4,
**caractérisé en ce que**
- la première roue de commutation (13) porte une bride radiale circulaire (24) qui est exclusivement en prise avec une denture extérieure (202) de la seconde roue de commutation (15) et dont la surface périphérique est en regard de cette denture extérieure (202) en laissant un entrefer radial entre les flancs de dents (22', 23'),
- la bride radiale (24) présente, dans la zone de la came de commutation (19), une cavité qui est de forme symétrique radialement,
- son rayon de flanc diminue de manière continue jusqu'à un minimum,
- la came de commutation (19) comporte une première partie de came (191) faisant radialement saillie sur la première roue de commutation (13) pour venir exclusivement en prise dans l'autre denture extérieure (201) de la seconde roue de commutation (15), avec un contour extérieur en forme de demi-cercle dont la distance radiale maximale par rapport à l'axe de rotation (26) de la première roue de commutation (13), est égale au diamètre extérieur de la bride radiale (24), et une seconde partie de came (192) formée par les surfaces limites (241, 242) de la cavité de flanc, et
- les deux parties (191, 192) de la came de commutation (19) sont disposées l'une par rapport à l'autre pour que, lors de la rotation de la première roue de commutation (13), elles arrivent successivement en prise avec la denture extérieure associée (201, 202) de la seconde roue de commutation (15), en laissant un entrefer par rapport aux flancs de dents (22, 23 ; 22', 23'), et qu'ainsi la seconde partie de came (192) tourne dans la denture extérieure (202) lorsque la première partie de came (191) se dégage de l'autre denture extérieure (201).

6. Capteur de déplacement selon l'une quelconque des revendications 1-5,
**caractérisé en ce que**
le dispositif de détection (12) de la position de rotation de la seconde roue de commutation (15) est une unité de capteur magnétique qui détecte les variations de champ magnétique des roues de commutation rotatives (13, 15).

7. Capteur de déplacement selon la revendication 6,
**caractérisé en ce que**
l'unité de capteur comporte au moins deux capteurs Hall (27-29) écartés l'un de l'autre suivant un certain angle de rotation, dans le champ magnétique de la seconde roue de commutation, et une inhomogénéité magnétique est prévue sur la seconde roue de commutation (15) pour produire une variation du signal de l'un des capteurs Hall (27-29) lorsque son alignement se rapproche.

8. Capteur de déplacement selon la revendication 7,
**caractérisé en ce que**
- l'unité de capteur comporte un autre capteur Hall (32) prévu dans le champ magnétique de la première roue de commutation (13), et une inhomogénéité magnétique prévue sur la première roue de commutation (13) au niveau de la came de commutation (19) et produisant, en se rapprochant de l'alignement avec l'autre capteur Hall (32), une variation de son signal de sortie, et
- les signaux de sortie du capteur Hall (32) associé à la première roue de commutation (13), et de l'un respectif des capteurs Hall (27-29) associés à la seconde roue de commutation (15), sont combinés selon une combinaison logique « ET ».

9. Capteur de déplacement selon la revendication 7 ou 8,
**caractérisé en ce que**
l'inhomogénéité est réalisée par une encoche en forme de segment ou par une cavité prévue dans la roue de commutation (13, 15).

10. Capteur de déplacement selon la revendication 9,
**caractérisé en ce qu'**
- en cas d'aimantation axiale des roues de commutation (13, 15), les capteurs Hall (27, 28, 29, 33) sont disposés de manière fixe à une certaine distance axiale par rapport à la roue de commutation (13, 15) associée, de préférence sur une plaque de circuit (31), et
- les encoches en forme de segments des roues de commutation (13, 15) sont constituées par un prisme (30, 33) d'une seule pièce, à section de préférence en forme de segment de cercle, et qui est prévu en saillie à une certaine distance radiale de l'axe de rotation (16, 26) de la roue de commutation respective (13, 15).
